# EUROPÄISCHE PATENTSCHRIFT

(11) **EP 0 344 358 B1**
(45) Veröffentlichungstag und Bekanntmachung des Hinweises auf die Patenterteilung: **07.01.1993**
(21) Anmeldenummer: 88116593.0
(22) Anmeldetag: 06.10.1988
(51) Int. Cl.: B23D 53/02, B27B 13/06

(54) **Sägebandrolle**
Bandsaw wheel
Roue de lame de scie à ruban

(30) Priorität: 03.06.1988 DE 3819018
(43) Veröffentlichungstag der Anmeldung: 06.12.1989
(73) Patentinhaber: Gustav Wagner Maschinenfabrik GmbH & Co. KG,i.K., 72760 Reutlingen (DE)
(72) Erfinder: Raach, Peter, D-7405 Mössingen 5 (DE)
(74) Vertreter: Popp, Eugen, Dr.

(56) Entgegenhaltungen:
- DE-A- 3 040 829
- DE-C- 2 740 212
- GB-A- 487
- GB-A- 530
- GB-A- 731 246
- US-A- 3 363 495
- US-A- 3 968 715

## Beschreibung

Die Erfindung betrifft eine Sägebandrolle, insbesondere für Horizontal-Bandsägemaschinen, deren das Sägeband tragende Umfangs- bzw. Lauffläche aus einem verschleißfesten, harten, metallischen Werkstoff besteht, wobei zwischen der Lauffläche und der Habe der Sägebandrolle geräusch- und vibrationsdämpfendes Material angeordnet ist.

Es ist allgemein bekannt, daß bei Bandsägemaschinen das Bandsägeblatt beim Umlauf um die Sägebandrollen, insbesondere beim Schneidvorgang, ein schrilles und kreischendes Geräusch hervorruft, wobei der Grund dafür primär darin liegt, daß das Sägeband während des Schneidvorganges in Quer- und in Längsrichtung in Schwingungen gerät. Außer den schrillen und kreischenden Geräuschen, die für das Umfeld sehr störend sind, haben die Vibrationen des Bandsägeblatts auch einen schädlichen Einfluß auf die Schneidgenauigkeit und die Schneidleistung sowie auf die Lebensdauer des Bandsägeblatts. Des weiteren wird das Schneidöl vom schwingenden Bandsägeblatt regelrecht verspritzt unter Ausbildung eines Schneidölnebels. Schließlich führen die Vibrationen des Bandsägeblatts zu einer rauhen Schnittfläche am geschnittenen Werkstück und zu einem Schneidspalt, der am Anfang des Schnittes breiter ist als der sich später entwikkelnde und durch die Geometrie des Sägeblatts vorgegebene Schneidspalt. Bei stärkeren Vibrationen läßt sich ein genauer, gerader Schnitt nicht mehr erreichen.

Zur Lösung der genannten Probleme wird zum einen vorgeschlagen, die Lauffläche der Sägebandrolle mit einem profilierten Belag aus elastischem Material zu versehen (US-A 33 63 495), wobei nach der DE-C 27 40 212 der Laufflächenbelag durch O-Ringe gebildet wird, die in seitlichem Abstand voneinander in schwalbenschwanzförmigen Umfangsnoten der Sägebandrolle liegen. Diese Konstruktion hat jedoch den Nachteil, daß sie extrem verschleißanfällig ist, so daß nach kürzester Betriebszeit der profilierte Belag aus elastischem Material ausgetauscht werden muß.

Zum anderen wurde zur Lösung des vorgenannten Problems vorgeschlagen, bei einer nach Art eines Speichenrades ausgebildeten Sägebandrolle die Zwischenräume zwischen den Speichen einerseits und dem Laufkranz und der Habe andererseits mit Polymerbeton auszufüllen (Bandsägemaschine PBA 1660/1660 der Firma KASTO Karl Stolzer; Hinweis z.B. in VDI - Z. Bd. 129 (1987) Nr. 1 - Januar, S. 81). Dadurch wird zwar eine gewisse Geräusch- und Vibrationsdämpfung erzielt, ohne daß die vorerwähnten Verschleißprobleme auftreten, andererseits läßt auch diese Konstruktion bezüglich der Geräusch- und Vibrationsdämpfung durchaus noch zu wünschen übrig, insbesondere im Hinblick darauf, daß die Speichen jeweils als Hohlkastenprofile ausgebildet sind.

Auch in der US-A-3 968 715 werden geräuschdämpfende Maßnahmen an einer Sägebandrolle vorgeschlagen derart, daß das Sägeband auf einem metallischen Ring abgestützt ist, der über eine elastische Zwischenschicht auf einer äußeren Umfangsfläche der Sägebandrolle gelagert ist. Der metallische Ring wird seitlich gehalten durch einen Sägeband-Anlaufbund einerseits und Haltelaschen andererseits. Dementsprechend ist eine metallische Berührung zwischen dem genannten metallischen Ring und der Sägebandrolle bzw. deren Habe nicht ausgeschlossen. Insbesondere liegt bei der bekannten Konstruktion das Sägeband unmittelbar am mit der Nabe der Sägebandrolle einheitlich verbundenen Anlaufbund an (Sp.6, Z. 61-67 der US-A-3 968 715). Dementsprechend ist auch hier eine metallische Geräuschbrücke zwischen Sägeband und Habe der Sägebandrolle vorhanden.

Der vorliegenden Erfindung liegt die Aufgabe zugrunde, die genannten Nachteile der bekannten Konstruktionen zu vermeiden und eine Sägebandrolle so auszubilden, daß bei unverändert hoher Verschleißfestigkeit ein äußerst geräuscharmer und zugleich präziser Lauf des Sägebandes erreicht wird.

Diese Aufgabe wird durch die kennzeichnenden Merkmale des Patentanspruchs 1 gelöst, wobei die Unteransprüche bevorzugte konstruktive Details der Erfindung betreffen.

Die Bedeutung der Erfindung liegt also darin, daß zwischen der Lauffläche der Sägebandrolle, die aus Verschleißgründen aus Werkstoff mit harter Oberfläche gebildet ist, und der Nabe der Sägebandrolle die metallische Verbindung unterbrochen wird, und zwar mittels eines geäuschdämpfenden Materials. Durch Verwendung der vorgeschlagenen Materialien wird die Festigkeit bzw. Stabilität der Sägebandrolle nicht beeinträchtigt. Gleichzeitig wird jedoch eine hohe Geräusch- und Vibrationsdämpfung erreicht.

Eine besonders vorteilhafte konstruktive Ausführungsform ist in den Ansprüchen 2 und 4 beschrieben, die sich sowohl durch eine hohe Geräusch- und Vibrationsdämpfung als auch hohe Rundlaufgenauigkeit auszeichnet, so daß eine höhere Vorspannung des Bandsägeblatts möglich ist.

Zusätzlich, aber auch unabhängig davon, können zur Geräusch-und Vibrationsdämpfung auch noch die Maßnahmen nach Anspruch 4 dienen. Dementsprechend erstreckt sich das geräuschdämpfende Material nicht ringförmig um die Achse der Sägebandrolle, sondern quer dazu.

Nachstehend werden drei Ausführungsformen einer erfindungsgemäß ausgebildeten Sägebandrolle anhand der beigefügten Zeichnung näher erläutert. Es zeigen:
- Fig. 1: eine erste Ausführungsform einer erfindungsgemäß ausgebildeten Sägebandrolle im schematischen Teilschnitt;
- Fig. 2: eine zweite Ausführungsform einer erfindungsgemäß ausgebildeten Sägebandrolle im schematischen Teilschnitt; und
- Fig. 3: eine dritte Ausführungsform einer erfindungsgemäß ausgebildeten Sägebandrolle im schematischen Teilschnitt.

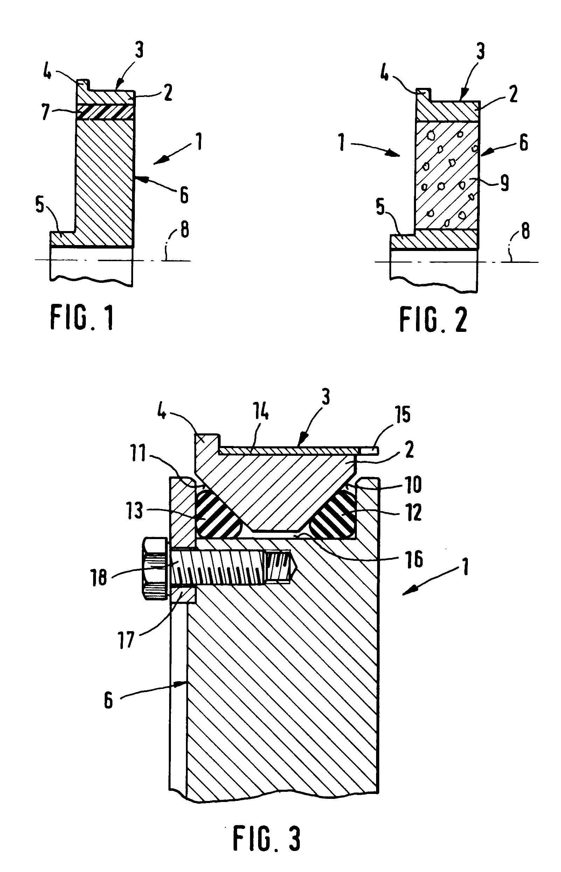

Die im Teilschnitt dargestellte Sägebandrolle 1 gemäß Fig. 1 besteht aus einem äußeren Ring 2, dessen Umfangsfläche 3 die Lauffläche für das nichtdargestellte Bandsägeblatt darstellt. An einer Seite, nämlich der in Fig. 1 linken Seite, ist die Lauffläche 3 durch einen Anlaufbund 4 begrenzt. Die Nabe der Sägebandrolle ist mit der Bezugsziffer 5 gekennzeichnet. Die metallische Verbindung 6 zwischen der Nabe 5 und dem äußeren Umfangsring 2 bzw. der Lauffläche 3 ist durch eine sich über den Umfang erstreckende Schicht 7 aus geräuschdämpfendem Material, insbesondere Hartgummi, Silikon oder dergleichen unterbrochen. Es sei an dieser Stelle erwähnt, daß mehr als eine Zwischenschicht 7 zwischen Lauffläche 3 und Nabe 5 vorgesehen sein können. Die geometrische Achse der Sägebandrolle 1 ist durch die Bezugsziffer 8 gekennzeichnet. Wie eingangs bereits ausgeführt, besteht der Laufflächenring 2 aus einem verschleißfesten Material, vorzugsweise Stahl, Keramik oder dergl. Die Nabe 5 sowie Verbindung 6 können aus weniger verschleißfestem, vorzugsweise ebenfalls metallischem Werkstoff hergestellt sein.

Die Ausführungsform nach Fig. 2 unterscheidet sich von derjenigen nach Fig. 1 dadurch, daß die gesamte Verbindung zwischen dem Laufflächenring 2 und der Nabe 5 durch ein geräuschdämpfendes Material 9 ausgefüllt ist, und zwar vorzugsweise durch Polymer-Beton.

Bei der Ausführungsform nach Fig. 3 wird die Lauffläche 3 durch die äußere Umfangsfläche eines Laufrings 2 mit etwa trapezförmigem Querschnitt gebildet, der durch zwei an den beiden Schrägflächen 10, 11 anliegende Gummi- oder dergleichen -ringe 12, 13 am Radkörper bzw. an der metallischen Verbindung 6 zwischen Laufflächenring 2 und nichtdargestellter Nabe abgestützt ist. Auch der in Fig. 3 dargestellte Laufflächenring 2 weist einen Anlaufbund 4 für das mit der Bezugsziffer 14 gekennzeichnete Bandsägeblatt auf. Die Schneidzähne des Bandsägeblatts 14 sind mit der Bezugsziffer 15 angedeutet.

Der Laufflächenring 2 gemäß Fig. 3 ist innerhalb einer am Radkörper bzw. an der Radscheibe 6 ausgebildeten Umfangsnut sowohl radial als auch axial über die Gummiringe 12, 13 abgestützt, wobei die eine seitliche Begrenzung, in Fig. 3 linke Begrenzung, der Umfangsnut 16 durch einen mit der Radscheibe 6 verschraubten Haltering 17 erfolgt. Die Schraubverbindung zwischen Haltering 17 und Radscheibe 6 ist in Fig. 3 mit der Befestigungsschraube 18 angedeutet. Die Gummi- oder dergleichen -ringe 12, 13 liegen im montierten Zustand in den beiden Ecken der Umfangsnut 16. Vorzugsweise werden dafür O-Ringe verwendet, deren Querschnitt sich im montierten Zustand entsprechend Fig. 3 etwa dreieckförmig verformt.

Wie oben ausgeführt, kann die Sägebandrolle 1 auch in Sandwichbauweise hergestellt sein und mindestens eine elastisch nachgiebige, insbesondere visko-elastische (Silikon) Zwischenschicht aufweisen, die sich quer zur Mittelachse 8 der Sägebandrolle 1 erstreckt. Diese Ausführungsform ist zeichnerisch nicht dargestellt.

Desweiteren ist die erfindungsgemäße Sägebandrolle auch für Vertikalbandsägen geeignet.

## Patentansprüche

1. Sägebandrolle, insbesondere für Horizontal-Bandsägemaschinen, deren das Sägeband tragende Umfangs- bzw. Lauffläche aus einem verschleißfesten, harten, metallischen Werkstoff besteht, wobei zwischen der Lauffläche und der Nabe der Sägebandrolle geräusch- und vibrationsdämpfendes Material angeordnet ist,
**dadurch gekennzeichnet,** daß
die metallische Verbindung (6) zwischen Lauffläche (3) und Nabe (5) der Sägebandrolle (1) durch mindestens eine Zwischenschicht (7; 12, 13) aus geräusch- und vibrationsdämpfendem Material vollständig unterbrochen ist, wobei als geräusch- und vibrationsdämpfendes Material Gummi, insbesondere Hartgummi, Silikon oder dgl. Elastomermaterial dient.

2. Sägebandrolle nach Anspruch 1,
**dadurch gekennzeichnet,** daß die geräusch- und vibrationsdämpfende Zwischenschicht durch elastische Bänder, insbesondere Gummi- oder dgl. -ringe (12, 13) gebildet ist, die die Lauffläche (3) an der die metallische Verbindung (6) zwischen Lauffläche (3) und Nabe (5) definierenden Radscheibe abstützen.

3. Sägebandrolle, nach Anspruch 1 oder 2,
**dadurch gekennzeichnet,** daß sie in Sandwich-Bauweise hergestellt ist und mindestens eine sich quer zur Mittelachse (8) erstreckende elastisch nachgiebige, insbesondere visko-elastische Zwischenschicht aufweist.

4. Sägebandrolle nach Anspruch 2,
**dadurch gekennzeichnet,** daß die Lauffläche (3) durch die äußere Umfangsfläche eines Laufrings (2) mit etwa trapezförmigem Querschnitt gebildet ist, der durch zwei an den beiden Schrägflächen (10, 11) anliegende Gummi- oder dgl. -ringe (12, 13) gegenüber der die Verbindung (6) zwischen Lauffläche (3) und Habe (5) bildenden Radscheibe abgestützt ist.

## Claims

1. Sawing band pulley, in particular for horizontal band-sawing machines, the circumferential or running surface of which pulley, bearing the sawing band, consists of a wear-resistant, hard, metallic material, noise-damping and vibration-damping material being arranged between the running surface and the hub of the sawing band pulley, characterised in that the metallic connection (6) between running surface (3) and hub (5) of the sawing band pulley (1) is completely interrupted by at least one intermediate layer (7; 12, 13) of noise-damping and vibration-damping material, rubber, in particular hard rubber, silicone or such like elastomer material serving as noise-damping and vibration-damping material.

2. Sawing band pulley according to Claim 1, characterised in that the noise-damping and vibration-damping intermediate layer is formed by flexible bands, in particular rubber or such like rings (12, 13), which support the running surface (3) on the wheel disc defining the metallic connection (6) between running surface (3) and hub (5).

3. Sawing band pulley according to Claim 1 or 2, characterised in that it is produced in sandwich construction and has at least one elastically compliant, in particular visco-elastic intermediate layer, extending transversely with respect to the centre axis (8).

4. Sawing band pulley according to Claim 2, characterised in that the running surface (3) is formed by the outer circumferential surface of a running ring (2) of approximately trapezoidal cross-section, which ring is supported with respect to the wheel disc forming the connection (6) between running surface (3) and hub (5) by two rubber or such like rings (12, 13) bearing against the two sloping surfaces (10, 11).

## Revendications

1. Roue de lame de scie à ruban, en particulier pour machines horizontales à lame de scie à ruban, dont la suface de périphérie ou de roulement portant la lame de scie à ruban est formée d'une matière métallique dure, résistante à l'usure, et dans laquelle un matériau amortissant le bruit et les vibrations est disposé entre la surface de roulement et le moyeu, caractérisée en ce que la liaison métallique (6) entre la surface de roulement (3) et le moyeu (5) de la roue (1) de la lame de scie à ruban est interrompue complètement par au moins une couche intermédiaire (7 ; 12,13) en matériau amortissant le bruit et les vibrations, de telle sorte que du caoutchouc, en particulier du caoutchouc dur, du silicone ou un autre matériau élastomère, serve de matériau amortissant le bruit et les vibrations.

2. Roue de lame de scie à ruban selon la revendication 1, caractérisée en ce que la couche intermédiaire amortissant le bruit et les vibrations est formée de bandes élastiques, en particulier de bandes en caoutchouc ou d'anneaux analogues (12,13), qui appuient la surface de roulement (3) sur le disque de roue définissant la liaison métallique (6) entre la surface de roulement (3) et le moyeu (5).

3. Roue de lame de scie à ruban selon la revendication 1 ou 2, caractérisée en ce qu'elle est fabriquée en une forme de construction en sandwich et qu'elle présente au moins une couche intermédiaire élastiquement déformable, en particulier viscoélastique, s'étendant transversalement à l'axe médian (8).

4. Roue de lame de scie à ruban selon la revendication 2, caractérisée en ce que la surface de roulement (3) est formée par la surface périphérique extérieure d'une bague de roulement (2) de section sensiblement trapézoïdale, laquelle s'appuie contre le disque de roue formant la liaison (6) entre la surface de roulement (3) et le moyeu (5), par deux anneaux (12,13) en caoutchouc ou analogue appliqués contre les deux surfaces inclinées (10,11).
